(19) Europäisches Patentamt
European Patent Office
Office européen des brevets

(11) **EP 4 371 783 B1**

(12) **EUROPEAN PATENT SPECIFICATION**

(45) Date of publication and mention of the grant of the patent:
**23.09.2026 Bulletin 2026/39**

(21) Application number: **23206659.7**

(22) Date of filing: **30.10.2023**

(51) International Patent Classification (IPC):
***B60C 1/00*** *(2006.01)* ***C08C 19/02*** *(2006.01)*
***C08L 9/06*** *(2006.01)* ***C08L 15/00*** *(2006.01)*
***C08K 3/36*** *(2006.01)* ***C08K 3/04*** *(2006.01)*

(52) Cooperative Patent Classification (CPC):
(C-Sets available)
**C08C 19/02; B60C 1/0016** (Cont.)

# (54) TIRE

REIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.11.2022 JP 2022185081**

(43) Date of publication of application:
**22.05.2024 Bulletin 2024/21**

(73) Proprietor: **Sumitomo Rubber Industries, Ltd.**
**Kobe-shi, Hyogo 651-0072 (JP)**

(72) Inventor: **WATANABE, Kenya**
**Kobe-shi, Hyogo, 651-0072 (JP)**

(74) Representative: **Manitz Finsterwald**
**Patent- und Rechtsanwaltspartnerschaft mbB**
**Ganghoferstraße 29**
**80339 München (DE)**

(56) References cited:
**EP-A1- 4 005 820**
**JP-A- 2020 158 709**
**US-A1- 2010 108 213**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 236/10, C08F 2/06;**
**C08F 236/10, C08F 4/48;**
**C08L 7/00, C08L 9/06, C08L 25/16, C08L 91/00, C08L 91/06, C08K 3/04, C08K 3/36, C08K 5/548, C08K 5/09, C08K 3/22, C08K 5/18, C08K 3/06, C08K 5/47, C08K 5/31;**
**C08L 9/06, C08L 7/00, C08L 25/16, C08L 91/00, C08L 91/06, C08K 3/04, C08K 3/36, C08K 5/548, C08K 5/09, C08K 3/22, C08K 5/18, C08K 3/06, C08K 5/47, C08K 5/31;**
**C08L 9/06, C08L 7/00, C08L 91/00, C08L 25/16, C08L 91/06, C08K 3/04, C08K 3/36, C08K 5/548, C08K 5/09, C08K 3/22, C08K 5/18, C08K 3/06, C08K 5/47, C08K 5/31;**
**C08L 15/00, C08L 7/00, C08L 25/16, C08L 91/00, C08L 91/06, C08K 3/04, C08K 3/36, C08K 5/548, C08K 5/09, C08K 3/22, C08K 5/18, C08K 3/06, C08K 5/47, C08K 5/31;**
**C08L 15/00, C08L 7/00, C08L 45/00, C08L 91/00, C08L 91/06, C08K 3/04, C08K 3/36, C08K 5/548, C08K 5/09, C08K 3/22, C08K 5/18, C08K 3/06, C08K 5/47, C08K 5/31;**
**C08L 15/00, C08L 7/00, C08L 47/00, C08L 91/00, C08L 91/06, C08K 3/04, C08K 3/36, C08K 5/548, C08K 5/09, C08K 3/22, C08K 5/18, C08K 3/06, C08K 5/47, C08K 5/31;**
C08F 236/06, C08F 212/08

## Description

TECHNICAL FIELD

The present invention relates to a tire.

BACKGROUND ART

One of required performances of tires is handling stability for stable driving as the driver wishes during driving. For example, Patent Literature 1 describes that a rubber composition which contains a polymer including a structural unit derived from 1,3,7-octatriene containing 3,4-bonds can improve handling stability. Patent Literature 2 relates to a tire having improved fuel efficiency, abrasion resistance, steering stability and wet grip performance during high-speed running and the tire tread comprises natural rubber, SBR, carbon black, and silica.

CITATION LIST

PATENT LITERATURE

Patent Literature 1: JP 2020-007425 A
Patent Literature 2: EP 20 849 974 A

SUMMARY OF INVENTION

TECHNICAL PROBLEM

With improved vehicle performances and well-developed highways, it is not uncommon these days that vehicles travel long distances at high speeds. Handling stability during high-speed driving is desired to be further improved.
The present invention aims to solve the problem and to improve handling stability during high-speed driving.

SOLUTION TO PROBLEM

The present invention relates to a tire including a tread,

the tread including a rubber composition that contains rubber components including an isoprene-based rubber and a styrene-butadiene rubber, a silica, and a carbon black,
the rubber composition containing the silica in an amount of 80 parts by mass or more per 100 parts by mass of the rubber components,
the rubber composition satisfying the following formulas (1) and (2),
the rubber composition and the tread satisfying the following formulas (3) and (4):

$$\text{Amount of isoprene-based rubber} - \text{Total styrene content of rubber components} > 0 \quad (1)$$

$$\text{Amount of carbon black} - \text{Total styrene content of rubber components} > 0 \quad (2)$$

$$(3)\ A/B > 8$$

$$(4)\ \left|C/D\right| > 2.00$$

where A denotes the amount (parts by mass) of the silica in the rubber composition, B denotes a largest thickness (mm) of the tread, C denotes a land ratio (%) of the tread, and D denotes a glass transition temperature (°C) of the rubber composition.

ADVANTAGEOUS EFFECTS OF INVENTION

The tire of the present invention includes a tread, the tread including a rubber composition that contains rubber components including an isoprene-based rubber and a styrene-butadiene rubber, a silica, and a carbon black, the rubber composition containing the silica in an amount of 80 parts by mass or more per 100 parts by mass of the rubber components, the rubber composition satisfying the formulas (1) and (2), the amount A (parts by mass) of the silica in the rubber composition, the largest thickness B (mm) of the tread, the land ratio C (%) of the tread, and the glass transition temperature D (°C) of the rubber composition satisfying the formulas (3) and (4). This tire can improve handling stability during high-speed driving.

DESCRIPTION OF EMBODIMENTS

The tire of the present invention includes a tread. The tread includes a rubber composition that contains rubber components including an isoprene-based rubber and a styrene-butadiene rubber, a silica, and a carbon black. The rubber composition contains the silica in an amount of 80 parts by mass or more per 100 parts by mass of the rubber components. The rubber composition satisfies the formulas (1) and (2). The amount A (parts by mass) of the silica in the rubber composition, the largest thickness B (mm) of the tread, the land ratio C (%) of the tread, and the glass transition temperature D (°C) of the rubber composition satisfy the formulas (3) and (4). The tire can improve handling stability during high-speed driving.

The reason for the above-described advantageous effect is not exactly clear, but the advantageous effect is believed to be due to the following mechanism.

1) The rubber components including an isoprene-based rubber and a styrene-butadiene rubber in the rubber composition that constitutes the tread form a microphase-separated structure in the rubber phase. Moreover, the amount of the isoprene-based rubber is controlled to be higher than the total styrene content of the rubber components to satisfy the formula (1), whereby the rubber phase can contain styrene domains in which styrene moieties of the styrene-butadiene rubber are aggregated. The styrene domains not only exhibit a scratching effect between the tread surface and the road surface but also rub against surrounding rubber molecular chains. Thus, the tread surface can have an improved grip.
2) At the same time, the amount of the contained carbon black is controlled to be larger than the total styrene content of the rubber components, specifically, the amount of the carbon black and the total styrene content of the rubber components are controlled to satisfy the formula (2), leading to an interaction between the carbon black, which is highly exothermic, and styrene moieties of the styrene-butadiene rubber. Thus, the tread surface can have a further improved grip.
3) Further, the amount of the contained silica is controlled to be sufficiently high relative to the largest thickness of the tread such that the amount of the silica and the largest thickness of the tread satisfy the formula (3). This allows the silica to more easily transfer the friction on the tread surface to the inside of the tire. Unlike carbon black, silica reduces less energy due to the friction with surrounding rubber molecular chains and therefore can transfer the deformation caused by the friction on the tread surface to the inside of the tire, thereby instantly causing a reaction force against the deformation.
4) During high-speed driving, the rubber composition having a lower glass transition temperature is thought to have a lower stiffness and be less likely to cause a reaction force. The reaction force on the tread surface can be increased by controlling the land ratio of the tread to be sufficiently high relative to the glass transition temperature of the rubber composition so that the land ratio of the tread and the glass transition temperature of the rubber composition satisfy the formula (4).

As a result of the above-described 1) to 4), the tread surface has an improved grip, and also the deformation caused by the friction on the tread surface is instantly transferred to the inside of the tire to induce fast response, thereby facilitating improvement of handling stability during high-speed driving.

Presumably, handling stability during high-speed driving can be improved by the above-described actions.

As described above, the present invention solves the problem (aim) in improving handling stability during high-speed driving by providing a tire including a tread, the tread including a rubber composition that contains rubber components including an isoprene-based rubber and a styrene-butadiene rubber, a silica, and a carbon black, the rubber composition containing the silica in an amount of 80 parts by mass or more per 100 parts by mass of the rubber components. In the tire, the rubber composition satisfies the formula (1): Amount of isoprene-based rubber - Total styrene content of rubber components > 0 and the formula (2): Amount of carbon black - Total styrene content of rubber components > 0, and also the amount A (parts by mass) of the silica in the rubber composition, the largest thickness B (mm) of the tread, the land ratio C (%) of the tread, and the glass transition temperature D (°C) of the rubber composition

satisfy the formula (3): A/B > 8 and the formula (4): |C/D| > 2.00. In other words, the parameters of the formulas (1) to (4) do not define the problem (aim). The problem herein is to improve handling stability during high-speed driving. In order to solve the problem, the tire has been formulated to satisfy the parameters.

The tire of the present invention includes a tread including a rubber composition that contains rubber components including an isoprene-based rubber and a styrene-butadiene rubber, a silica, and a carbon black.

Herein, the term "rubber component" refers to a component that has a weight average molecular weight (Mw) of 150000 or more and contributes to crosslinking.

The weight average molecular weight of the rubber components is preferably 170000 or more, more preferably 200000 or more, still more preferably 250000 or more, while it is preferably 2000000 or less, more preferably 1500000 or less, still more preferably 1000000 or less. When the weight average molecular weight is within the range indicated above, the advantageous effect tends to be better achieved.

Herein, the weight average molecular weight (Mw) may be measured by gel permeation chromatography (GPC) (GPC-8000 series available from Tosoh Corporation, detector: differential refractometer, column: TSKgel SuperMultipore HZ-M available from Tosoh Corporation) and calibrated with polystyrene standards.

The total styrene content (% by mass) of the rubber components in the rubber composition is preferably 5.0% by mass or higher, more preferably 7.0% by mass or higher, still more preferably 10.0% by mass or higher, further preferably 12.0% by mass or higher, further preferably 15.0% by mass or higher, further preferably 18.0% by mass or higher, further preferably 21.0% by mass or higher. The upper limit is preferably 60.0% by mass or lower, more preferably 50.0% by mass or lower, still more preferably 40.0% by mass or lower, further preferably 35.0% by mass or lower, particularly preferably 30.0% by mass or lower. When the total styrene content is within the range indicated above, the advantageous effect tends to be better achieved.

The total styrene content of the rubber components refers to the total amount (unit: % by mass) of the styrene moieties in the entire rubber components and can be calculated by $\Sigma$[(Amount of each rubber component) $\times$ (Styrene content of the each rubber component)/100]. For example, when 100% by mass of rubber components include 85% by mass of a SBR having a styrene content of 40% by mass, 5% by mass of a SBR having a styrene content of 25% by mass, and 10% by mass of a BR having a styrene content of 0% by mass, the total styrene content is 35.25% by mass (= 85 $\times$ 40/100 + 5 $\times$ 25/100 + 10 $\times$ 0/100).

The styrene content of the rubber components can be measured by nuclear magnetic resonance (NMR).

In EXAMPLES herein, the total styrene content of the rubber components is calculated by the above-described expression. Yet, the total styrene content may be determined by analyzing the tire using, for example, a pyrolysis gas chromatography/mass spectrometry (Py-GC/MS) system or the like.

The rubber composition contains rubber components including an isoprene-based rubber and a styrene-butadiene rubber (SBR).

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used, including those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

Non-limiting examples of the SBR include emulsion-polymerized styrene-butadiene rubber (E-SBR) and solution-polymerized styrene-butadiene rubber (S-SBR). To better achieve the advantageous effect, emulsion-polymerized styrene-butadiene rubber is preferred among these. These may be used alone or in combinations of two or more.

The styrene content (amount of styrene) of the SBR is preferably 5% by mass or higher, more preferably 7% by mass or higher, still more preferably 10% by mass or higher, while it is preferably 40% by mass or lower, more preferably 30% by mass or lower, still more preferably 25% by mass or lower. When the styrene content is within the range indicated above, the advantageous effect tends to be better achieved.

The vinyl content (amount of vinyl) of the SBR is preferably 5% by mass or higher, more preferably 10% by mass or higher, still more preferably 15% by mass or higher, particularly preferably 30% by mass or higher, while it is preferably 50% by mass or lower, more preferably 45% by mass or lower, still more preferably 40% by mass or lower, particularly preferably 35% by mass or lower. When the vinyl content is within the range indicated above, the advantageous effect tends to be better achieved.

Herein, the vinyl content of the rubber components is determined by $^{1}$H-NMR analysis.

SBR products manufactured or sold by Sumitomo Chemical Co., Ltd., JSR Corporation, Asahi Kasei Corporation, Zeon Corporation, etc. may be used as the SBR. SBR synthesized by known methods is also usable.

When one type of SBR is used, the styrene content of the SBR refers to the styrene content of the one SBR, while when multiple types of SBR are used, it refers to the average styrene content.

The average styrene content of the SBR can be calculated using the expression: {$\Sigma$(amount of each SBR $\times$

styrene content of the each SBR)}/amount of total SBR. For example, when 100% by mass of rubber components include 85% by mass of a SBR having a styrene content of 40% by mass and 5% by mass of a SBR having a styrene content of 25% by mass, the average styrene content of the SBR is 39.2% by mass (= (85 × 40 + 5 × 25)/(85 + 5)).

The vinyl content of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of the SBR can be calculated using the expression: Σ{amount of each SBR × (100 (% by mass) - styrene content (% by mass) of the each SBR) × vinyl content (% by mass) of the each SBR}/Σ{amount of each SBR × (100 (% by mass) - styrene content (% by mass) of the each SBR)}. For example, when 100 parts by mass of rubber components include 75 parts by mass of a SBR having a styrene content of 40% by mass and a vinyl content of 30% by mass, 15 parts by mass of a SBR having a styrene content of 25% by mass and a vinyl content of 20% by mass, and the remaining 10 parts by mass of a rubber component other than SBR, the average vinyl content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

The SBR may be either unmodified SBR or modified SBR.

The modified SBR may be any SBR having a functional group interactive with filler such as silica or carbon black. Examples include a chain end-modified SBR obtained by modifying at least one chain end of a SBR with a compound (modifier) having the above functional group (i.e., a chain end-modified SBR terminated with the functional group); a backbone-modified SBR having the functional group in the backbone; a backbone- and chain end-modified SBR having the functional group in both the backbone and chain end (e.g., a backbone- and chain end-modified SBR in which the backbone has the functional group and at least one chain end is modified with the modifier); and a chain end-modified SBR into which a hydroxy or epoxy group has been introduced by modification (coupling) with a polyfunctional compound having two or more epoxy groups in the molecule. These may be used alone in combinations of two or more.

Examples of the functional group include functional groups each including at least one atom selected from the group consisting of a nitrogen atom, an oxygen atom, and a silicon atom. These may be used alone or in combinations of two or more.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. To better achieve the advantageous effect, preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

The SBR may be a hydrogenated SBR. To better achieve the advantageous effect, a hydrogenated SBR is preferably used as the SBR.

The degree of hydrogenation of the hydrogenated SBR (percentage of hydrogenated butadiene moieties of the SBR) is preferably 75 mol% or higher, more preferably 80 mol% or higher, still more preferably 90 mol% or higher, particularly preferably 93 mol% or higher, while it is preferably 99 mol% or lower, more preferably 98 mol% or lower. When the degree of hydrogenation is within the range indicated above, the advantageous effect tends to be better achieved.

The degree of hydrogenation can be calculated from the rate of decrease in the unsaturated bond signals in the $^{1}$H-NMR spectrum measured.

The method and reaction conditions for producing the hydrogenated SBR are not limited. The hydrogenated SBR may be produced by hydrogenating SBR by known methods and known conditions. Usually, the hydrogenation is performed at 20°C to 150°C under 0.1 to 10 MPa hydrogen pressure in the presence of a hydrogenation catalyst. The degree of hydrogenation may be controlled as desired by varying, for example, the amount of the hydrogenation catalyst, the hydrogen pressure during the hydrogenation reaction, or the duration of the reaction. The hydrogenation catalyst used may be usually a compound containing any of the metals of groups 4 to 11 of the periodic table. For example, compounds containing any of the atoms: Ti, V, Co, Ni, Zr, Ru, Rh, Pd, Hf, Re, and Pt can be used as hydrogenation catalysts. More specific examples of the hydrogenation catalysts include metallocene compounds containing Ti, Zr, Hf, Co, Ni, Pd, Pt, Ru, Rh, Re, or other metals; supported heterogeneous catalysts in which a metal such as Pd, Ni, Pt, Rh, or Ru is supported on a carrier such as carbon, silica, alumina, or diatomaceous earth; homogeneous Ziegler catalysts in which an organic salt or acetylacetone salt of a metal element such as Ni or Co is combined with a reducing agent such as an organoaluminum; organometallic compounds or complexes containing Ru, Rh, or other metals; and fullerenes and carbon nanotubes in which hydrogen is stored.

Of these, metallocene compounds containing Ti, Zr, Hf, Co, or Ni are preferred because they allow the hydrogenation reaction to be performed in a homogeneous system in an inert organic solvent. More preferred are metallocene compounds containing Ti, Zr, or Hf. In particular, hydrogenation catalysts obtained by reaction of titanocene compounds and alkyllithiums are preferred because such catalysts are inexpensive and industrially particularly useful.

Specific examples include hydrogenation catalysts described in, for example, JP H1-275605 A, JP H5-271326 A, JP H5-271325 A, JP H5-222115 A, JP H11-292924 A, JP 2000-37632 A, JP S59-133203 A, JP S63-5401 A, JP S62-218403 A, JP H7-90017 A, JP S43-19960 B, and JP S47-40473 B. Each of these hydrogenation catalysts may be used alone or in combinations of two or more. The hydrogenated SBR may be produced using a copolymer of monomers including styrene and at least one of ethylene and 1-butene, and optionally butadiene.

The total amount of the isoprene-based rubber and the SBR based on 100% by mass of the rubber component content is preferably 70% by mass or more, more preferably 80% by mass or more, still more preferably 90% by mass or more, particularly preferably 95% by mass or more, and may be 100% by mass. When the total amount is within the range indicated above, the advantageous effect tends to be better achieved.

The amount of the isoprene-based rubber based on 100% by mass of the rubber component content is preferably 10% by mass or more, more preferably 20% by mass or more, still more preferably 30% by mass or more, while it is preferably 70% by mass or less, more preferably 60% by mass or less, still more preferably 50% by mass or less, further preferably 40% by mass or less. When the amount is within the range indicated above, the advantageous effect tends to be better achieved.

The amount of the SBR based on 100% by mass of the rubber component content is preferably 30% by mass or more, more preferably 40% by mass or more, still more preferably 50% by mass or more, further preferably 60% by mass or more, while it is preferably 90% by mass or less, more preferably 80% by mass or less, still more preferably 70% by mass or less. When the amount is within the range indicated above, the advantageous effect tends to be better achieved.

The rubber composition may contain a different rubber component other than the isoprene-based rubber and the SBR.

Examples of the different rubber component include polybutadiene rubbers (BR), styrene-isoprene-butadiene rubbers (SIBR), ethylene-propylene-diene rubbers (EPDM), chloroprene rubbers (CR), and acrylonitrile-butadiene rubbers (NBR). Examples of rubber components other than the above-described rubber components include butyl-based rubbers and fluororubbers. These may be used alone or in combinations of two or more. BR is preferred among these.

Any BR may be used. Examples include high-cis BR having a high cis content, BR containing syndiotactic polybutadiene crystals, and BR synthesized using rare earth catalysts (rare earth-catalyzed BR). These may be used alone or in combinations of two or more.

The cis content of the BR is preferably 20% by mass or higher, more preferably 40% by mass or higher, still more preferably 60% by mass or higher, particularly preferably 80% by mass or higher, most preferably 90% by mass or higher. The upper limit is not limited. When the cis content is within the range indicated above, the advantageous effect tends to be better achieved.

Herein, the cis content of rubber components can be measured by infrared absorption spectrometry.

When one type of BR is used, the cis content of the BR refers to the cis content of the one BR, while when multiple types of BR are used, it refers to the average cis content.

The average cis content of BR may be calculated by $\{\Sigma[(\text{Amount of each BR}) \times (\text{Cis content of the each BR})]\}/(\text{Total amount of all types of BR})$. For example, when 100% by mass of rubber components include 20% by mass of a BR having a cis content of 90% by mass and 10% by mass of a BR having a cis content of 40% by mass, the average cis content of the BR is 73.3% by mass (= $(20 \times 90 + 10 \times 40)/(20 + 10)$).

The BR may be either unmodified BR or modified BR. Examples of the modified BR include those into which functional groups listed for the modified SBR have been introduced.

For example, usable BR may be commercially available from Ube Industries, Ltd., JSR Corporation, Asahi Kasei Corporation, Zeon Corporation, etc.

The amount of the BR based on 100% by mass of the rubber component content is preferably 10% by mass or more, more preferably 20% by mass or more, while it is preferably 40% by mass or less, more preferably 30% by mass or less. When the amount is within the range indicated above, the advantageous effect tends to be better achieved.

The rubber components may include an oil-extended rubber that has been extended with an oil or a resin-extended rubber that has been extended with a resin. These may be used alone or in combinations of two or more.

The oil in the oil-extended rubber or the resin in the resin-extended rubber is as described below for the plasticizer. The oil content of the oil-extended rubber or the resin content of the resin-extended rubber is not limited, and it is usually about 10 to 50 parts by mass per 100 parts by mass of the rubber solid content.

The rubber composition contains a silica.

Non-limiting examples of the silica include dry silica (anhydrous silica) and wet silica (hydrous silica). These may be used alone or in combinations of two or more. Wet silica is preferred among these because it contains a large number of silanol groups. A biomass silica made from a biomass material such as rice husks may be appropriately used.

Usable silica may be commercially available from Degussa, Rhodia, Tosoh Silica Corporation, Solvay Japan, Tokuyama Corporation, etc.

The nitrogen adsorption specific surface area ($N_2SA$) of the silica is preferably 80 $m^2/g$ or more, more preferably

100 $m^2/g$ or more, still more preferably 120 $m^2/g$ or more, further preferably 150 $m^2/g$ or more, further preferably 175 $m^2/g$ or more. The $N_2SA$ is preferably 300 $m^2/g$ or less, more preferably 250 $m^2/g$ or less, still more preferably 200 $m^2/g$ or less, particularly preferably 180 $m^2/g$ or less. When the $N_2SA$ is within the range indicated above, the advantageous effect tends to be better achieved.

Here, the $N_2SA$ of the silica can be measured in accordance with ASTM D3037-81.

The amount of the silica per 100 parts by mass of the rubber component content is 80 parts by mass or more, more preferably 85 parts by mass or more, still more preferably 90 parts by mass or more, further preferably 95 parts by mass or more, particularly preferably 100 parts by mass or more, while it is preferably 200 parts by mass or less, more preferably 180 parts by mass or less, still more preferably 150 parts by mass or less, particularly preferably 120 parts by mass or less. When the amount is within the range indicated above, the advantageous effect tends to be better achieved.

The rubber composition preferably contains a silane coupling agent together with the silica.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as $\gamma$-glycidoxypropyltriethoxysilane and $\gamma$-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more. To better achieve the advantageous effect, sulfide silane coupling agents and mercapto silane coupling agents are preferred among these.

Usable silane coupling agents may be commercially available from Degussa, Momentive, Shin-Etsu Silicone, Tokyo Chemical Industry Co., Ltd., AZmax. Co., Dow Corning Toray Co., Ltd., etc.

The amount of silane coupling agents per 100 parts by mass of the silica is preferably 3 parts by mass or more, more preferably 5 parts by mass or more, still more preferably 8 parts by mass or more, while it is preferably 25 parts by mass or less, more preferably 20 parts by mass or less, still more preferably 15 parts by mass or less. When the amount is within the range indicated above, the advantageous effect tends to be better achieved.

The rubber composition contains carbon black.

Examples of the carbon black include N134, N110, N220, N234, N219, N339, N330, N326, N351, N550, and N762. Recycled carbon black produced by decomposing plastic products or carbon black-containing rubber products such as tires are also usable. These may be used alone or in combinations of two or more.

The nitrogen adsorption specific surface area ($N_2SA$) of the carbon black is preferably 50 $m^2/g$ or more, more preferably 100 $m^2/g$ or more, still more preferably 114 $m^2/g$ or more, further preferably 120 $m^2/g$ or more, particularly preferably 135 $m^2/g$ or more. The $N_2SA$ is preferably 250 $m^2/g$ or less, more preferably 200 $m^2/g$ or less, still more preferably 160 $m^2/g$ or less, particularly preferably 150 $m^2/g$ or less. When the $N_2SA$ is within the range indicated above, the advantageous effect tends to be better achieved.

Here, the nitrogen adsorption specific surface area of the carbon black may be measured in accordance with JIS K 6217-2:2001.

The carbon black preferably has a dibutyl phthalate oil absorption (DBP oil absorption) of 80 mL/100 g or more, more preferably 90 mL/100 g or more, still more preferably 100 mL/100 g or more, particularly preferably 110 mL/100 g or more, most preferably 114 mL/100 g or more. The DBP oil absorption is also preferably 200 mL/100 g or less, more preferably 170 mL/100 g or less, still more preferably 150 mL/100 g or less, particularly preferably 125 mL/100 g or less. When the DBP oil absorption is within the range indicated above, the advantageous effect tends to be better achieved.

The dibutyl phthalate oil absorption of the carbon black may be measured in accordance with JIS-K6217-4:2001.

Usable carbon black may be commercially available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

The amount of the carbon black per 100 parts by mass of the rubber component content is preferably 10 parts by mass or more, more preferably 15 parts by mass or more, still more preferably 20 parts by mass or more, further preferably 25 parts by mass or more, while it is preferably 100 parts by mass or less, more preferably 80 parts by mass or less, still more preferably 50 parts by mass or less, particularly preferably 30 parts by mass or less. When the amount is within the range indicated above, the advantageous effect tends to be better achieved.

The rubber composition may contain different fillers other than the silica and the carbon black. The different fillers may be known materials in the rubber industry. Examples include inorganic fillers such as calcium carbonate, talc, alumina, clay, aluminum hydroxide, aluminum oxide, and mica; and difficult-to-disperse fillers.

The total filler content (total amount of fillers) per 100 parts by mass of the rubber component content is preferably 90 parts by mass or higher, more preferably 100 parts by mass or higher, still more preferably 105 parts by mass or higher, further preferably 110 parts by mass or higher, further preferably 120 parts by mass or higher, further preferably 125 parts by mass or higher, while it is preferably 300 parts by mass or lower, more preferably 250 parts by mass or lower, still more preferably 200 parts by mass or lower, particularly preferably 150 parts by mass or lower. When the total filler content is within the range indicated above, the advantageous effect tends to be better achieved.

The silica content based on 100% by mass of the filler content of the rubber composition is preferably 40% by mass or higher, more preferably 50% by mass or higher, still more preferably 60% by mass or higher, further preferably 70% by mass or higher, further preferably 75% by mass or higher, further preferably 80% by mass or higher. The upper limit is not limited, and it is preferably 95% by mass or lower, more preferably 90% by mass or lower, still more preferably 85% by mass or lower. When the silica content is within the range indicated above, the advantageous effect tends to be better achieved.

The rubber composition may contain a plasticizer.

Herein, the term "plasticizer" refers to a material that imparts plasticity to rubber components. It may be either liquid or solid at room temperature (25°C). The plasticizer may be used alone or in combinations of two or more.

The plasticizer content (total amount of plasticizers) of the rubber composition per 100 parts by mass of the rubber component content is preferably 10 parts by mass or higher, more preferably 30 parts by mass or higher, still more preferably 50 parts by mass or higher, further preferably 55 parts by mass or higher, further preferably 60 parts by mass or higher, particularly preferably 65 parts by mass or higher, most preferably 70 parts by mass or higher, while it is preferably 200 parts by mass or lower, more preferably 150 parts by mass or lower, still more preferably 100 parts by mass or lower, particularly preferably 90 parts by mass or lower. When the total plasticizer content is within the range indicated above, the advantageous effect tends to be better achieved.

The plasticizer content includes the amounts of oils and resins contained in rubber (oil-extended rubbers, resin-extended rubbers) or sulfur (oil-containing sulfur).

Examples of the plasticizer include oils, liquid polymers, and resins. These may be used alone or in combinations of two or more.

Non-limiting examples of the oils include conventional oils, including process oils such as paraffinic process oils, aromatic process oils, and naphthenic process oils, low polycyclic aromatic (PCA) process oils such as TDAE and MES, plant oils, and mixtures thereof. These may be used alone or in combinations of two or more. In view of life cycle analysis, lubricating oils after being used in mixers for mixing rubber, automobile engines, etc. or waste cooking oil may be appropriately used.

Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil.

Usable oils may be commercially available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., Nisshin Oillio Group, etc.

Examples of the liquid polymers include liquid diene polymers (liquid rubbers) and liquid farnesene polymers, all of which are liquid at 25°C. Examples of liquid rubbers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). The chain end or backbone of these may be modified with a polar group. Hydrogenated products of these are also usable.

The weight average molecular weight (Mw) of the liquid diene polymers is preferably $1.0 \times 10^3$ to $5.0 \times 10^4$, more preferably $3.0 \times 10^3$ to $1.5 \times 10^4$ as measured by gel permeation chromatography (GPC) and calibrated with polystyrene standards. The lower limit of the Mw of the liquid diene polymers may be 4500 or 8500, and the upper limit may be 4500 or 8500.

Herein, the Mw of the liquid diene polymers is measured by gel permeation chromatography (GPC) and calibrated with polystyrene standards.

Usable liquid diene polymers may be commercially available from Sartomer, Kraray, etc.

The resins may be resins which are usually used as additives for tires. They may be either liquid or solid at room temperature (25°C). Examples include aromatic vinyl polymers, coumarone-indene resins, coumarone resins, indene resins, phenol resins, rosin resins, petroleum resins, terpene resins, and acrylic resins. The resins may be hydrogenated. These may be used alone or in combinations of two or more. The resins themselves may be copolymers of different monomers. To better achieve the advantageous effect, aromatic vinyl polymers, petroleum resins, and terpene resins are preferred, with aromatic vinyl polymers being more preferred among these.

The amount of the resins per 100 parts by mass of the rubber component content of the rubber composition is preferably 5 parts by mass or more, more preferably 15 parts by mass or more, still more preferably 25 parts by mass or more, particularly preferably 40 parts by mass or more, most preferably 50 parts by mass or more, while it is preferably 100

parts by mass or less, more preferably 80 parts by mass or less, still more preferably 70 parts by mass or less. When the amount is within the range indicated above, the advantageous effect tends to be better achieved.

The softening point of the resins which are solid at room temperature, if used, is preferably 50°C or higher, more preferably 55°C or higher, still more preferably 60°C or higher, particularly preferably 85°C or higher, while it is preferably 160°C or lower, more preferably 150°C or lower, still more preferably 140°C or lower, further preferably 115°C or lower, particularly preferably 100°C or lower. When the softening point is within the range indicated above, the advantageous effect tends to be better achieved. The softening point of the resins which are liquid at room temperature is preferably 20°C or lower, 10°C or lower, or 0°C or lower.

The softening point of the resins is determined in accordance with JIS K 6220-1:2001 using a ring and ball softening point measuring apparatus. The temperature at which the ball drops down is defined as the softening point.

The term "aromatic vinyl polymers" refers to polymers containing aromatic vinyl monomers as structural units. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The term "coumarone-indene resins" refers to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The term "coumarone resins" refers to resins containing coumarone as the main monomer component forming the skeleton (backbone) of the resins.

The term "indene resins" refers to resins containing indene as the main monomer component forming the skeleton (backbone) of the resins.

Examples of usable phenol resins include known polymers produced by reacting phenol with an aldehyde such as formaldehyde, acetaldehyde, or furfural in the presence of an acid or alkali catalyst. Preferred among these are those produced by reacting phenol with an aldehyde in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, C9/DCPD resins, and hydrogenated products of these resins. DCPD resins, hydrogenated DCPD resins, C9/DCPD resins, and hydrogenated C9/DCPD resins are preferred among these.

The term "terpene resins" refers to polymers containing terpenes as structural units. Examples include polyterpene resins produced by polymerization of terpene compounds, and aromatic modified terpene resins produced by polymerization of terpene compounds and aromatic compounds. Examples of usable aromatic modified terpene resins include terpene-phenol resins made from terpene compounds and phenolic compounds, terpene-styrene resins made from terpene compounds and styrene compounds, and terpene-phenol-styrene resins made from terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds, such as styrene and α-methylstyrene.

The term "acrylic resins" refers to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitably used among these.

Usable resins may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, ExxonMobil, KRATON Corporation, Nitto Chemical Co., Ltd., Nippon Shokubai Co., Ltd., ENEOS Corporation, Arakawa Chemical Industries, Ltd., Taoka Chemical Co., Ltd., etc.

The rubber composition may contain an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Usable antioxidants may be commercially available from Seiko Chemical Co., Ltd., Sumitomo Chemical Co., Ltd., Ouchi Shinko Chemical Industrial Co., Ltd., Flexsys, etc. These may be used alone or in combinations of two or more.

The amount of antioxidants per 100 parts by mass of the rubber component content of the rubber composition is preferably 0.5 parts by mass or more, more preferably 0.8 parts by mass or more, still more preferably 1.0 parts by mass or more, while it is preferably 10.0 parts by mass or less, more preferably 6.0 parts by mass or less, still more preferably 4.0 parts by mass or less. When the amount is within the range indicated above, the advantageous effect tends to be better

achieved.

The rubber composition may contain a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other similar monomers. Usable waxes may be commercially available from Ouchi Shinko Chemical Industrial Co., Ltd., Nippon Seiro Co., Ltd., Seiko Chemical Co., Ltd., etc. These may be used alone or in combinations of two or more.

The amount of waxes per 100 parts by mass of the rubber component content of the rubber composition is preferably 1 part by mass or more, more preferably 2 parts by mass or more, while it is preferably 10 parts by mass or less, more preferably 6 parts by mass or less. When the amount is within the range indicated above, the advantageous effect tends to be better achieved.

The rubber composition may contain stearic acid.

Conventionally known stearic acid is usable. Usable stearic acid may be commercially available from NOF Corporation, Kao Corporation, FUJIFILM Wako Pure Chemical Corporation, Chiba Fatty Acid Co., Ltd., etc. These may be used alone or in combinations of two or more.

The amount of stearic acid per 100 parts by mass of the rubber component content of the rubber composition is preferably 1.0 parts by mass or more, more preferably 2.0 parts by mass or more, still more preferably 3.0 parts by mass or more, while it is preferably 10.0 parts by mass or less, more preferably 6.0 parts by mass or less. When the amount is within the range indicated above, the advantageous effect tends to be better achieved.

The rubber composition may contain zinc oxide.

Conventionally known zinc oxide is usable. Usable zinc oxide may be commercially available from Mitsui Mining & Smelting Co., Ltd., Toho Zinc Co., Ltd., Hakusui Tech Co., Ltd., Seido Chemical Industry Co., Ltd., Sakai Chemical Industry Co., Ltd., etc. These may be used alone or in combinations of two or more.

The amount of zinc oxide per 100 parts by mass of the rubber component content of the rubber composition is preferably 1.0 parts by mass or more, more preferably 2.0 parts by mass or more, still more preferably 2.5 parts by mass or more, further preferably 3.5 parts by mass or more, while it is preferably 10.0 parts by mass or less, more preferably 6.0 parts by mass or less. When the amount is within the range indicated above, the advantageous effect tends to be better achieved.

The rubber composition may contain sulfur.

Examples of the sulfur include those commonly used as crosslinking agents in the rubber industry, such as powdered sulfur, precipitated sulfur, colloidal sulfur, insoluble sulfur, highly dispersible sulfur, and soluble sulfur. Usable sulfur may be commercially available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The amount of sulfur per 100 parts by mass of the rubber component content of the rubber composition is preferably 0.5 parts by mass or more, more preferably 1.5 parts by mass or more, still more preferably 1.8 parts by mass or more, while it is preferably 3.5 parts by mass or less, more preferably 2.8 parts by mass or less, still more preferably 2.5 parts by mass or less. When the amount is within the range indicated above, the advantageous effect tends to be better achieved.

The rubber composition may contain a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD) and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable vulcanization accelerators may be commercially available from Sumitomo Chemical Co., Ltd., Ouchi Shinko Chemical Industrial Co., Ltd., etc. These may be used alone or in combinations of two or more.

The amount of vulcanization accelerators per 100 parts by mass of the rubber component content of the rubber composition is preferably 1.5 parts by mass or more, more preferably 2.5 parts by mass or more, still more preferably 3.5 parts by mass or more, further preferably 4.0 parts by mass or more, while it is preferably 10.0 parts by mass or less, more preferably 8.0 parts by mass or less, still more preferably 7.0 parts by mass or less. When the amount is within the range indicated above, the advantageous effect tends to be better achieved.

In addition to the above-described components, the rubber composition may further contain additives commonly used in the tire industry, such as organic peroxides. The amounts of the additives are each preferably 0.1 to 200 parts by mass per 100 parts by mass of the rubber component content.

In the rubber composition, the amount of the isoprene-based rubber (the isoprene-based rubber content (% by mass) based on 100% by mass of the rubber component content) and the total styrene content (% by mass) of the rubber

components satisfy the following formula (1):

Amount of isoprene-based rubber - Total styrene content of rubber components > 0. (1)

The value on the right side of the formula (1) is preferably 1, more preferably 2, still more preferably 5, particularly preferably 8. The value of "Amount of isoprene-based rubber - Total styrene content of rubber components" in the formula (1) is preferably less than 100, more preferably less than 70, still more preferably less than 50, further preferably less than 45, further preferably less than 40, particularly preferably less than 30, most preferably less than 20. When the value is within the range indicated above, the advantageous effect tends to be better achieved.

In the rubber composition, the amount of the carbon black (the carbon black content (parts by mass) per 100 parts by mass of the rubber component content) and the total styrene content (% by mass) of the rubber components satisfy the following formula (2):

Amount of carbon black - Total styrene content of rubber components > 0. (2)

The value on the right side of the formula (2) is preferably 1, more preferably 2, still more preferably 3, particularly preferably 5. The value of "Amount of carbon black - Total styrene content of rubber components" in the formula (2) is preferably less than 50, more preferably less than 40, still more preferably less than 30, further preferably less than 20, further preferably less than 15, further preferably less than 10, particularly preferably less than 7. When the value is within the range indicated above, the advantageous effect tends to be better achieved.

The glass transition temperature (tan $\delta$ peak temperature) of the (vulcanized) rubber composition is preferably -45°C or higher, more preferably -40°C or higher, still more preferably -35°C or higher, further preferably - 30°C or higher, further preferably -25°C or higher, further preferably -23°C or higher, further preferably -20°C or higher, while it is preferably 0°C or lower, more preferably -5°C or lower, still more preferably -10°C or lower, particularly preferably -15°C or lower. When the glass transition temperature is within the range indicated above, the advantageous effect tends to be better achieved.

The glass transition temperature may be measured by a temperature dependent viscoelasticity measurement test as described later in EXAMPLES.

The rubber composition may be prepared, for example, by kneading the above-described components using a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is usually 100°C or higher and 180°C or lower, preferably 120°C or higher and 170°C or lower. In a final kneading step of kneading vulcanizing agents and vulcanization accelerators, the kneading temperature is usually 120°C or lower, preferably 80°C or higher and 110°C or lower. Then, the composition obtained after kneading vulcanizing agents and vulcanization accelerators is usually vulcanized by, for example, press vulcanization. The vulcanization temperature is usually 140°C or higher and 190°C or lower, preferably 150°C or higher and 185°C or lower. The vulcanization time is usually 5 to 15 minutes.

The rubber composition is for use in treads (in particular, parts (cap treads) to come into contact with the road surface during driving).

To better achieve the advantageous effect, a rubber cut from the tread preferably satisfies the following formula (5) within 180 days after vulcanization:

$$(5)\quad Hso/Hsa \times 100 \geq 93.0$$

where Hso denotes a hardness at room temperature, and Hsa denotes a hardness at room temperature after 168-hour heat treatment at 80°C.

Presumably, the advantageous effect may be achieved for the following reason.

The temperature of the surface of the tread increases during high-speed driving due to the friction between the surface and the road surface. Reducing a change in the hardness of the tread rubber along with thermal degradation allows the surface of the tread rubber to better conform to the road surface and to more easily obtain a scratching effect derived from the domains having different harnesses. Thus, improvement of handling stability can be facilitated.

The value on the right side of the formula (5) is preferably 93.2, more preferably 93.4, still more preferably 93.8, further preferably 93.9, further preferably 94.0, further preferably 94.1, further preferably 95.5. The upper limit of the value of "Hso/Hsa $\times$ 100" in the formula (5) is not limited and may be 100. Yet, the value is preferably 99.0 or less, more preferably 98.0 or less, still more preferably 97.0 or less, further preferably 96.9 or less. When the value is within the range indicated above, the advantageous effect tends to be better achieved.

Here, Hso and Hsa may be measured by the methods described later in EXAMPLES.

Hso may be appropriately controlled within the range satisfying the formula (5). Hso is preferably 70 or less, more preferably 65 or less, still more preferably 64 or less, while it is preferably 45 or more, more preferably 50 or more, still more preferably 60 or more, further preferably 61 or more, further preferably 62 or more, further preferably 63 or more. Likewise, Hsa is preferably 75 or less, more preferably 70 or less, still more preferably 68 or less, further preferably 67 or less, further preferably 66 or less, while it is preferably 55 or more, more preferably 60 or more, still more preferably 62 or more, further preferably 64 or more, further preferably 65 or less. When Hso and Hsa are each within the range indicated above, the advantageous effect tends to be better achieved.

Hso and Hsa may be controlled by any method. Hso can be increased by, for example, increasing the amount of reinforcing agents, reducing the amount of softeners, increasing the amount of sulfur, or increasing the amount of vulcanization accelerators, while it can be reduced by, for example, reducing the amount of reinforcing agents, increasing the amount of softeners, reducing the amount of sulfur, or reducing the amount of vulcanization accelerators. Hsa can be reduced by, for example, using a (co)polymer with a low conjugated diene unit content as a rubber component, controlling Hso to be low, reducing the amount of sulfur and also increasing the amount of vulcanization accelerators, increasing the amounts of zinc oxide and stearic acid, adding a plasticizer with an iodine value of 100 to 150 g/100 g, or increasing the amount of heat given in vulcanization (longer time/higher temperature), while it can be increased by, for example, controlling Hso to be high, increasing the amount of sulfur and also reducing the amount of vulcanization accelerators, reducing the amounts of zinc oxide and stearic acids, or reducing the amount of heat given in vulcanization.

To better achieve the advantageous effect, a rubber cut from the tread preferably satisfies the following formula (6):

$$\text{Fracture energy (MPa·\%) of rubber} = \text{Elongation at break (\%) of rubber} \times \text{Tensile strength at break (MPa) of rubber} \times 1/2 \geq 5000. \quad (6)$$

Presumably, the advantageous effect may be achieved for the following reason.

The higher the abrasion energy is, the less likely the rubber is to break. Thus, satisfying the formula (6) suppresses breakage of the surface of the tread caused by the friction between the tread surface and the road surface during high-speed driving and also suppresses a reduction in the actual ground contact area. Thus, improvement of handling stability during high-speed driving can be facilitated.

The value on the right side of the formula (6) is preferably 5100, more preferably 5500, still more preferably 6000, particularly preferably 6500. The upper limit of the fracture energy of the rubber in the formula (6) is not limited, and a larger fracture energy is more preferred. For example, the upper limit is preferably 100000 or less, more preferably 50000 or less, still more preferably 10000 or less. When the value is within the range indicated above, the advantageous effect tends to be better achieved.

Herein, the fracture energy (MPa·%) of the rubber is a value of "TB × EB/2" where EB and TB denote the elongation at break (%) and the tensile strength at break (MPa), respectively, of the rubber at 23° C measured in accordance with JIS K6251:2010. Specifically, it may be measured by the method described later in EXAMPLES.

EB (elongation at break) can be controlled mainly by the amount of a reinforcing agent or a softener. TB (tensile strength at break) can be controlled mainly by the type and amount of a reinforcing agent or the rubber components.

The tire of the present invention may be produced from the above-described rubber composition by usual methods.

Specifically, the rubber composition in an unvulcanized state is extruded into the shape of a tread and assembled with other tire components on a tire building machine in a usual manner to build an unvulcanized tire. The unvulcanized tire is then heated and pressurized in a vulcanizer, whereby the tire is produced.

The tire includes a tread including a rubber composition that contains rubber components including an isoprene-based rubber and a styrene-butadiene rubber, a silica, and a carbon black. In the tire, the amount A of the silica (the silica content (parts by mass) per 100 parts by mass of the rubber component content) in the rubber composition and the largest thickness B (mm) of the tread satisfy the following formula (3):

$$(3)\quad A/B > 8.$$

The value on the right side of the formula (3) is preferably 9, more preferably 10, still more preferably 11, particularly preferably 13. The value of "A/B" in the formula (3) is preferably less than 30, more preferably less than 25, still more preferably less than 20, particularly preferably less than 15. When the value is within the range indicated above, the advantageous effect tends to be better achieved.

Herein, the term "the largest thickness B of the tread" is the thickness of the tread in an unused tire (new tire) and refers to the thickness in the tire radial direction from the tread surface (external surface of the tire) on the equator to a radially outer face of a reinforcing layer such as a band layer. When the tire has a groove on the equator, the largest

thickness B refers to a distance in the tire radial direction from an intersection of the tire equator and a straight line connecting the outermost edges of the groove in the tire radial direction to the above-described radially outer face of a reinforcing layer such as a band layer.

The largest thickness B (mm) of the tread (the largest thickness of a tread portion) is preferably 5.0 mm or more, more preferably 5.5 mm or more, still more preferably 6.0 mm or more, particularly preferably 7.0 mm or more, while it is preferably 10.0 mm or less, more preferably 9.5 mm or less, still more preferably 9.0 mm or less, particularly preferably 8.5 mm or less. When the largest thickness is within the range indicated above, the advantageous effect tends to be better achieved.

The tire includes a tread including a rubber composition that contains rubber components including an isoprene-based rubber and a styrene-butadiene rubber, a silica, and a carbon black. In the tire, the land ratio C (%) of the tread and the glass transition temperature (°C) of the rubber composition satisfy the following formula (4):

$$(4)\quad |C/D| > 2.00.$$

The value on the right side of the formula (4) is preferably 2.10, more preferably 2.50, still more preferably 2.80, further preferably 3.00, particularly preferably 3.40. The value of "|C/D|" in the formula (4) is preferably less than 7.00, more preferably less than 6.50, still more preferably less than 6.00, further preferably less than 5.50, further preferably less than 5.00, further preferably less than 4.50, particularly preferably less than 4.40. When the value is within the range indicated above, the advantageous effect tends to be better achieved.

Herein, when the tire is a pneumatic tire, the land ratio (C) is calculated from a contact patch obtained under the conditions of a normal rim, a normal internal pressure, and a normal load. When the tire is a non-pneumatic tire, the land ratio can be calculated as described above without a normal internal pressure.

The term "normal rim" refers to a rim specified for each tire by the standard in a standard system including standards according to which the tire is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, it will be followed. Moreover, for a tire which is not defined by any of the standards, it refers to a rim with the smallest diameter and, secondly, the narrowest width among the rims on which the tire can be mounted and can maintain the internal pressure, i.e., the rims that cause no air leakage between the rim and the tire.

The term "normal internal pressure" refers to an air pressure specified for each tire by the standard, and may be "maximum air pressure" in JATMA, "inflation pressure" in ETRTO, or the maximum value shown in Table "TIRE LOAD LIMITS AT VARIOUS COLD INFLATION PRESSURES" in TRA. Like "normal rim", JATMA, ETRTO, and TRA will be referenced in that order, and the corresponding standard will be followed. Moreover, for a tire which is not defined by any of the standards, it refers to a normal internal pressure of 250 kPa or more for another tire size defined by any of the standards, for which the normal rim is listed as the standard rim. Here, when a plurality of normal internal pressures of 250 kPa or more are listed, it refers to the smallest one of these normal internal pressures.

The term "normal load" refers to a load specified for each tire by the standard in a standard system including standards according to which the tire is provided and is a maximum mass which is allowed to impose on tires. The normal load may be "maximum load capacity" in JATMA, "load capacity" in ETRTO, or the maximum value shown in Table "TIRE LOAD LIMITS AT VARIOUS COLD INFLATION PRESSURES" in TRA. Like "normal rim" and "normal internal pressure" described above, JATMA, ETRTO, and TRA will be referenced in that order, and the corresponding standard will be followed. Moreover, for a tire which is not defined by any of the standards, the normal load $W_L$ is calculated by the following expressions.

$$V = \{(Dt/2)^2 - (Dt/2 - Ht)^2\} \times \pi \times Wt$$

$$W_L = 0.000011 \times V + 175$$

$W_L$: normal load (kg)
V: virtual volume ($mm^3$) of tire
Dt: outer diameter (mm) of tire
Ht: cross-sectional height (mm) of tire
Wt: cross-sectional width (mm) of tire

The contact patch may be determined by mounting the tire on a normal rim, applying a normal internal pressure to the tire, allowing the tire to stand at 25°C for 24 hours, applying black ink to the tread surface of the tire, and pressing the tread surface against a cardboard at a normal load (camber angle: 0°) for transfer to the cardboard. The transfer is performed in five positions while rotating the tire by 72° each in the circumferential direction. Namely, the contact patch is obtained five times. Here, in each of the five contact patches, portions interrupted by the grooves in the contour are smoothly connected, and the resulting shape is determined as a virtual ground contact face.

The land ratio (C) is calculated by the expression:

(Average of the areas of five contact patches (parts with black ink) transferred to cardboard)/(Average of the areas of virtual ground contact faces obtained from the five contact patches) $\times$ 100 (%).

The land ratio C (%) (percentage of land portions in the total ground contact area) of the tread is preferably 60% or higher, more preferably 65% or higher, while it is preferably 95% or lower, more preferably 90% or lower, still more preferably 85% or lower, further preferably 70% or lower. When the land ratio is within the range indicated above, the advantageous effect tends to be better achieved.

Examples of the tire include pneumatic tires and non-pneumatic tires. Of these, the tire is preferably a pneumatic tire. In particular, the tire can be suitably used as a summer tire, a winter tire (studless tire, snow tire, studded tire, etc.), an all-season tire, for example. The tire can be used for passenger cars, large passenger cars, large SUVs, heavy-duty vehicles such as trucks and buses, light trucks, or motorcycles, or as a racing tire (high performance tire), etc. Here, the term "passenger car tire" refers to a tire supposed to be mounted on an automobile that runs with four or more wheels and having a maximum load capacity (normal load) of 1400 kg or less.

EXAMPLES

Examples (working examples) which are considered preferable to implement the present invention are described below. Yet, the scope of the invention is not limited to the examples.

Tires produced using the chemicals listed below according to the specifications varied as shown in Table 1 were examined. The results calculated according to the below-described evaluations are shown in Table 1.

NR: TSR20
SBR 1: SBR produced in Production Example 1 described below (styrene content: 30% by mass, vinyl content: 30% by mass)
Hydrogenated SBR: hydrogenated SBR produced in Production Example 2 described below (styrene content: 30% by mass, vinyl content: 31% by mass)
SBR 2: SLR6430 (Trinseo, styrene content: 40% by mass, vinyl content: 25% by mass)
BR: BR150B (Ube Industries, Ltd., cis content: 97% by mass)
Carbon black: DIABLACK I (Mitsubishi Chemical Corporation, N220, $N_2SA$: 114 $m^2/g$, DBP oil absorption: 114 ml/100 g)
Silica: Ultrasil VN3 (Degussa, $N_2SA$: 175 $m^2/g$)
Silane coupling agent: Si266 (Degussa, bis(3-triethoxysilylpropyl)disulfide)
Resin 1: SYLVARES SA85 (Arizona Chemical, a copolymer of $\alpha$-methylstyrene and styrene, softening point: 85°C)
Resin 2: Oppera PR395 (ExxonMobil, C9/hydrogenated DCPD resin, softening temperature: 115°C)
Resin 3: Sylvatraxx 4150 (KRATON Corporation, polyterpene resin, softening temperature: 150°C)
Oil: VIVATEC400/500 (H&R, TDAE oil)
Stearic acid: stearic acid "TSUBAKI" (NOF Corporation)
Zinc oxide: zinc oxide #2 (Mitsui Mining & Smelting Co., Ltd.)
Antioxidant: Antigen 6C (Sumitomo Chemical Co., Ltd., N-(1,3-dimethylbutyl)-N'-phenyl-p-phenylenediamine)
Wax: SUNNOC N (Ouchi Shinko Chemical Industrial Co., Ltd.)
Sulfur: powdered sulfur (Karuizawa Sulfur Co., Ltd.)
Vulcanization accelerator CZ: NOCCELER CZ (Ouchi Shinko Chemical Industrial Co., Ltd., N-cyclohexyl-2-benzothiazolylsulfenamide)
Vulcanization accelerator DPG: NOCCELER D (Ouchi Shinko Chemical Industrial Co., Ltd., 1,3-diphenylguanidine)

(Production Example 1)

A sufficiently nitrogen-purged heat-resistant reaction vessel was charged with 2000 mL of n-hexane, 60 g of styrene, 140 g of butadiene, 0.93 g of TMEDA, and 0.45 mmol of n-butyllithium, followed by stirring at 50°C for five hours to

perform a polymerization reaction. Next, 20 mL of methanol was added, then unreacted substances were taken out from the reaction vessel, and the resulting reaction solution was introduced into water with stirring. The solvent was removed by steam stripping to give SBR. The SBR had a weight average molecular weight (Mw) of 480000, a styrene content of 30% by mass, and a vinyl content of 30% by mass.

(Production Example 2)

A sufficiently nitrogen-purged heat-resistant reaction vessel was charged with 2000 mL of n-hexane, 60 g of styrene, 140 g of butadiene, 0.93 g of TMEDA, and 0.45 mmol of n-butyllithium, followed by stirring at 50°C for five hours to perform a polymerization reaction. Next, the reaction solution was stirred for 20 minutes while supplying hydrogen gas at a pressure of 0.4 MPa gauge to react the unreacted polymer terminal lithium with hydrogen into lithium hydride. Hydrogenation was performed using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature, and the hydrogen pressure was returned to an ordinary pressure. Then, the reaction solution was drawn from the reaction vessel and introduced into water with stirring. The solvent was removed by steam stripping to give hydrogenated SBR. The hydrogenated SBR had a degree of hydrogenation of 80 mol%, a weight average molecular weight (Mw) of 480000, a styrene content of 30% by mass, and a vinyl content of 31% by mass.

<Production of test tire>

According to the formulations in Table 1, the chemicals other than the sulfur and the vulcanization accelerators are kneaded in a 1.7-L Banbury mixer (Kobe Steel, Ltd.) at 160°C for four minutes to obtain a kneaded mixture. Next, the kneaded mixture is kneaded with the sulfur and vulcanization accelerators using an open roll mill at 80°C for four minutes to obtain an unvulcanized rubber composition.

The unvulcanized rubber composition is formed into the shape of a tread and assembled with other tire components on a tire building machine to build an unvulcanized tire. Then, the unvulcanized tire is vulcanized at 170°C for 12 minutes, whereby a test tire (size: 195/65R15) is produced.

Vulcanized rubber compositions prepared from the compositions according to the formulations varied as shown in Table 1 and the test tires were simulated. Table 1 shows the results calculated as described in the following evaluations.

The evaluation standard for handling stability is Comparative Example 3.

(Temperature dependent viscoelasticity measurement test)

Each vulcanized rubber composition is measured using a viscoelastic spectrometer (Iwamoto Seisakusho Co., Ltd.) at a frequency of 10 Hz, an initial strain of 10%, an amplitude of ± 0.20%, and a temperature increase rate of 2°C/min to prepare a temperature dependent curve of the tan δ of the vulcanized rubber composition. The temperature corresponding to the highest tan δ value in the temperature dependent curve is determined as a tan δ peak temperature (Tg (°C)). The tan δ peak temperature corresponds to the glass transition temperature (composition Tg (°C)) of the (vulcanized) rubber composition.

(Hardness)

The hardness Hso (JIS-A hardness) at room temperature (25°C) of a specimen cut from the tread (cap tread) of each test tire is measured in accordance with JIS K6253-3 (2012) "Rubber, vulcanized or thermoplastic -Determination of hardness- Part 3: Durometer method" using a type A durometer. Further, the measured specimen is heat-treated at 80°C for 168 hours in a 20% oxygen atmosphere. The hardness Hsa at room temperature of the resulting specimen is measured as described above.

(Fracture energy)

A specimen cut from the tread (cap tread) of each test tire is subjected to a tensile test at 23°C in accordance with JIS K6251:2010 "Rubber, vulcanized or thermoplastics - Determination of tensile stress-strain properties" to measure the elongation at break EB (%) at 23°C and the tensile strength at break TB (MPa) at 23°C to calculate the fracture energy (fracture E (MPa·%) = TB × EB/2).

(Tensile test conditions)

Ambient temperature: 23°C
Test device: trade name "Strograph", Toyo Seiki Seisaku-sho, Ltd.
Tensile rate: 500 mm/min

<Handling stability>

A set of test tires of each example are mounted on a vehicle. A test driver drives the vehicle at an average speed of 120 km/h on a dry road and evaluates the handling stability during driving on a 5-point scale (point 5 is the highest). Total 10 test drivers conduct the evaluation, and the sum of their evaluation points is expressed as an index relative to the result of the evaluation standard set to 100. A higher index indicates better handling stability during high-speed driving.

[Table 1]

| | | Example | | | | | | | | | | | | | | Comparative Example | | | | | | |
|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 1 | 2 | 3 | 4 | 5 | 6 | 7 |
| Formulation (parts by mass) | NR | 30 | 30 | 50 | 30 | 30 | 30 | 30 | 30 | 30 | 30 | 30 | 30 | 30 | 40 | | | 20 | | 70 | | |
| | SBR 1 (Sty 30/Vin 30) | 70 | 70 | 50 | 70 | 70 | 70 | | | 70 | 70 | 70 | | | 60 | | 50 | | 50 | | | 70 |
| | Hydrogenated SBR | | | | | | | 70 | 70 | | | | 70 | 70 | | | | | | | | |
| | SBR 2 (Sty 40/Vin 25) | | | | | | | | | | | | | | | 50 | | 80 | | | 50 | |
| | BR | | | | | | | | | | | | | | | 50 | 50 | | 50 | 30 | 50 | 30 |
| | Carbon black | 25 | 25 | 25 | 25 | 25 | 25 | 25 | 25 | 25 | 25 | 25 | 25 | 25 | 25 | 5 | 80 | 80 | 25 | 80 | 5 | 80 |
| | Silica (A) | 80 | 80 | 80 | 80 | 80 | 80 | 80 | 80 | 100 | 100 | 80 | 80 | 100 | 80 | 60 | 20 | 20 | 80 | 20 | 60 | 20 |
| | Silane coupling agent | 6.4 | 6.4 | 6.4 | 6.4 | 6.4 | 6.4 | 6.4 | 6.4 | 8.0 | 8.0 | 6.4 | 6.4 | 8.0 | 6.4 | 6.4 | 1.6 | 1.6 | 6.4 | 1.6 | 6.4 | 1.6 |
| | Resin 1 (SA85) | 25 | 40 | 40 | 40 | 40 | 50 | 40 | | 40 | 50 | | | 40 | 25 | | 30 | 5 | 30 | 30 | | 50 |
| | Resin 2 (PR395) | | | | | | | | 40 | | | 40 | | | | | | | | | | |
| | Resin 3 (Sylvatraxx4150) | | | | | | | | | | | | 40 | | | | | | | | | |
| | Oil | 30 | 15 | 15 | 15 | 15 | 5 | 15 | 15 | 30 | 15 | 30 | 15 | 30 | 30 | 20 | 25 | 45 | 25 | 25 | 20 | 5 |
| | Stearic acid | 2 | 2 | 2 | 2 | 2 | 2 | 2 | 2 | 2 | 2 | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 | 2 | 2 | 2 | 2 | 2 | 2 | 2 | 2 | 2 | 2 |
| | Antioxidant | 1 | 1 | 1 | 1 | 1 | 1 | 1 | 1 | 1 | 1 | 1 | 1 | 1 | 1 | 1 | 1 | 1 | 1 | 1 | 1 | 1 |
| | Wax | 1 | 1 | 1 | 1 | 1 | 1 | 1 | 1 | 1 | 1 | 1 | 1 | 1 | 1 | 1 | 1 | 1 | 1 | 1 | 1 | 1 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator CZ | 2 | 2 | 2 | 2 | 2 | 2 | 2 | 2 | 2 | 2 | 2 | 2 | 2 | 2 | 2 | 2 | 2 | 2 | 2 | 2 | 2 |
| | Vulcanization accelerator DPG | 2 | 2 | 2 | 2 | 2 | 2 | 2 | 2 | 2 | 2 | 2 | 2 | 2 | 2 | 2 | 2 | 2 | 2 | 2 | 2 | 2 |
| Physical properties | Hso | 63 | 61 | 62 | 61 | 61 | 60 | 63 | 63 | 62 | 64 | 63 | 63 | 63 | 63 | 63 | 62 | 63 | 62 | 61 | 63 | 63 |
| | Hsa | 67 | 65 | 66 | 65 | 65 | 64 | 65 | 65 | 66 | 68 | 67 | 66 | 65 | 67 | 70 | 67 | 71 | 67 | 67 | 70 | 68 |
| | Hso/Has × 100 | 94.0 | 93.8 | 93.9 | 93.8 | 93.8 | 93.8 | 96.9 | 96.9 | 93.9 | 94.1 | 94.0 | 95.5 | 96.9 | 94.0 | 90.0 | 92.5 | 88.7 | 92.5 | 91.0 | 90.0 | 92.6 |
| | Composition Tg (D) | -25 | -25 | -23 | -15 | -15 | -10 | -15 | -15 | -15 | -10 | -15 | -20 | -15 | -30 | -35 | -32 | -35 | -32 | -35 | -35 | -15 |
| | Fracture E | 5500 | 5500 | 6500 | 5500 | 5500 | 6000 | 6500 | 6500 | 5000 | 6000 | 5500 | 5500 | 6500 | 5000 | 4500 | 4000 | 5500 | 3500 | 4000 | 4500 | 5000 |
| Structure | Largest thickness B (mm) of tread portion | 7.0 | 8.5 | 8.5 | 7.0 | 7.0 | 8.5 | 8.5 | 8.5 | 7.0 | 7.0 | 7.0 | 7.0 | 7.0 | 7.0 | 11.0 | 8.5 | 8.5 | 11.0 | 8.5 | 7.0 | 8.5 |
| | Percentage (C) of land portions in total ground contact area | 65 | 65 | 65 | 65 | 70 | 65 | 65 | 65 | 65 | 65 | 65 | 65 | 65 | 65 | 60 | 60 | 60 | 60 | 60 | 60 | 65 |
| | A/B | 11 | 9 | 9 | 11 | 11 | 9 | 9 | 9 | 14 | 14 | 11 | 11 | 14 | 11 | 5 | 2 | 2 | 7 | 2 | 9 | 2 |
| | C/D | 2.60 | 2.60 | 2.83 | 4.33 | 4.67 | 6.50 | 4.33 | 4.33 | 4.33 | 6.50 | 4.33 | 3.25 | 4.33 | 2.60 | 1.71 | 1.88 | 1.71 | 1.88 | 1.71 | 1.71 | 4.33 |
| | (e) Handling stability | 110 | 116 | 118 | 126 | 132 | 116 | 118 | 124 | 134 | 130 | 126 | 120 | 140 | 106 | 94 | 96 | 100 | 98 | 96 | 96 | 98 |

## Claims

1. A tire comprising a tread,

the tread comprising a rubber composition that contains rubber components including an isoprene-based rubber and a styrene-butadiene rubber, a silica, and a carbon black,
the rubber composition containing the silica in an amount of 80 parts by mass or more per 100 parts by mass of the rubber components,
the rubber composition satisfying the following formulas (1) and (2),
the rubber composition and the tread satisfying the following formulas (3) and (4):

$$\text{Amount of isoprene-based rubber} - \text{Total styrene content of rubber components} > 0 \quad (1)$$

$$\text{Amount of carbon black} - \text{Total styrene content of rubber components} > 0 \quad (2)$$

$$(3)\ A/B > 8$$

$$(4)\ |C/D| > 2.00$$

where A denotes the amount (parts by mass) of the silica in the rubber composition, B denotes a largest thickness (mm) of the tread, C denotes a land ratio (%) of the tread, and D denotes a glass transition temperature (°C) of the rubber composition.

2. The tire according to claim 1, wherein a rubber cut from the tread satisfies the following formula (5) within 180 days after vulcanization:

$$(5)\ Hso/Hsa \times 100 \geq 93.0$$

where Hso denotes a hardness at room temperature, and Hsa denotes a hardness at room temperature after 168-hour heat treatment at 80°C, wherein Hso and Hsa are measured according to the method specified in the description.

3. The tire according to claim 1 or 2, wherein a rubber cut from the tread satisfies the following formula (6):

$$\text{Fracture energy (MPa·\%) of rubber} = \text{Elongation at break (\%) of rubber} \times \text{Tensile strength at break (MPa) of rubber} \times 1/2 \geq 5000, \quad (6)$$

wherein the fracture energy is measured according to the method specified in the description.

4. The tire according to any one of claims 1 to 3,
wherein the rubber composition satisfies the following formula:

$$50 > \text{Amount of isoprene-based rubber} - \text{Total styrene content of rubber components} > 8.$$

5. The tire according to any one of claims 1 to 4,
wherein the rubber composition satisfies the following formula:

$$50 > \text{Amount of carbon black} - \text{Total styrene content of rubber components} > 5.$$

6. The tire according to any one of claims 1 to 5,
wherein the rubber composition contains the isoprene-based rubber in an amount of 10 to 70% by mass based on 100% by mass of the rubber components.

**7.** The tire according to any one of claims 1 to 6, wherein the rubber composition contains the carbon black in an amount of 10 to 100 parts by mass per 100 parts by mass of the rubber components.

**8.** The tire according to any one of claims 1 to 7, wherein the total styrene content of the rubber components is 5.0 to 60.0% by mass.

**9.** The tire according to any one of claims 1 to 8, wherein the amount A (parts by mass) of the silica in the rubber composition and the largest thickness B (mm) of the tread satisfy the following formula:

$$30 > A/B > 10.$$

**10.** The tire according to any one of claims 1 to 9, wherein the land ratio C (%) of the tread and the glass transition temperature D (°C) of the rubber composition satisfy the following formula:

$$5.50 > |C/D| > 2.50.$$

**11.** The tire according to any one of claims 1 to 10, wherein the rubber composition contains the silica in an amount of 90 to 200 parts by mass per 100 parts by mass of the rubber components.

**12.** The tire according to any one of claims 1 to 11, wherein the largest thickness of the tread is 5.0 to 10.0 mm.

**13.** The tire according to any one of claims 1 to 12, wherein the land ratio of the tread is 60 to 95%.

**14.** The tire according to any one of claims 1 to 13, wherein the glass transition temperature of the rubber composition is -45°C to 0°C.

**15.** The tire according to any one of claims 1 to 14, wherein a rubber cut from the tread satisfies the following formula within 180 days after vulcanization:

$$70 \geq Hso \geq 45$$

where Hso denotes a hardness at room temperature, measured according to the method specified in the description.

## Patentansprüche

**1.** Reifen, der einen Laufstreifen umfasst,

wobei der Laufstreifen eine Kautschukzusammensetzung umfasst, die einen isoprenbasierten Kautschuk und einen Styrol-Butadien-Kautschuk umfassende Kautschukkomponenten, ein Siliciumdioxid und einen Ruß enthält,
wobei die Kautschukzusammensetzung das Siliciumdioxid in einer Menge von 80 Massenteilen oder mehr pro 100 Massenteile der Kautschukkomponenten enthält,
wobei die Kautschukzusammensetzung die folgenden Formeln (1) und (2) erfüllt,
wobei die Kautschukzusammensetzung und der Laufstreifen die folgenden Formeln (3) und (4) erfüllen:

Menge an isoprenbasiertem Kautschuk - Gesamtstyrolgehalt der Kautschukkomponenten > 0 (1)

$$(2)\ \text{Menge an Ruß} - \text{Gesamtstyrolgehalt der Kautschukkomponenten} > 0$$

$$(3)\ A/B > 8$$

$$(4)\ |C/D| > 2{,}00$$

worin A die Menge (Massenteile) des Siliciumdioxids in der Kautschukzusammensetzung bezeichnet, B eine größte Dicke (mm) des Laufstreifens bezeichnet, C einen Positivprofilanteil (%) des Laufstreifens bezeichnet, und D eine Glasübergangstemperatur (°C) der Kautschukzusammensetzung bezeichnet.

**2.** Reifen nach Anspruch 1,

wobei ein aus dem Laufstreifen geschnittener Kautschuk die folgende Formel (5) innerhalb von 180 Tagen nach der Vulkanisation erfüllt:

$$(5)\ Hso/Hsa \times 100 \geq 93{,}0$$

worin Hso eine Härte bei Raumtemperatur bezeichnet, und Hsa eine Härte bei Raumtemperatur nach einer 168-stündigen Wärmebehandlung bei 80°C bezeichnet, wobei Hso und Hsa gemäß dem in der Beschreibung spezifizierten Verfahren gemessen sind.

**3.** Reifen nach Anspruch 1 oder 2, wobei ein aus dem Laufstreifen geschnittener Kautschuk die folgende Formel (6) erfüllt:

$$\text{Bruchenergie (MPa·\%) des Kautschuks} = \text{Bruchdehnung (\%) des Kautschuks} \times \text{Bruchzugfestigkeit (MPa) des Kautschuks} \times 1/2 \geq 5000, \quad (6)$$

wobei die Bruchenergie gemäß dem in der Beschreibung spezifizierten Verfahren gemessen ist.

**4.** Reifen nach einem der Ansprüche 1 bis 3, wobei die Kautschukzusammensetzung die folgende Formel erfüllt:

50 > Menge an isoprenbasiertem Kautschuk - Gesamtstyrolgehalt der Kautschukkomponenten > 8.

**5.** Reifen nach einem der Ansprüche 1 bis 4, wobei die Kautschukzusammensetzung die folgende Formel erfüllt:

$$50 > \text{Menge an Ruß} - \text{Gesamtstyrolgehalt der Kautschukkomponenten} > 5.$$

**6.** Reifen nach einem der Ansprüche 1 bis 5,
wobei die Kautschukzusammensetzung den isoprenbasierten Kautschuk in einer Menge von 10 bis 70 Massen-% bezogen auf 100 Massen-% der Kautschukkomponenten enthält.

**7.** Reifen nach einem der Ansprüche 1 bis 6,
wobei die Kautschukzusammensetzung den Ruß in einer Menge von 10 bis 100 Massenteilen pro 100 Massenteile der Kautschukkomponenten enthält.

**8.** Reifen nach einem der Ansprüche 1 bis 7,
wobei der Gesamtstyrolgehalt der Kautschukkomponenten 5,0 bis 60,0 Massen-% beträgt.

**9.** Reifen nach einem der Ansprüche 1 bis 8,
wobei die Menge A (Massenteile) des Siliciumdioxids in der Kautschukzusammensetzung und die größte Dicke B (mm) des Laufstreifens die folgende Formel erfüllen:

$$30 > A/B > 10.$$

**10.** Reifen nach einem der Ansprüche 1 bis 9,
wobei der Positivprofilanteil C (%) des Laufstreifens und die Glasübergangstemperatur D (°C) der Kautschukzusammensetzung die folgende Formel erfüllen:

$$5{,}50 > |C/D| > 2{,}50.$$

**11.** Reifen nach einem der Ansprüche 1 bis 10,
wobei die Kautschukzusammensetzung das Siliciumdioxid in einer Menge von 90 bis 200 Massenteilen pro 100 Massenteile der Kautschukkomponenten enthält.

**12.** Reifen nach einem der Ansprüche 1 bis 11,
wobei die größte Dicke des Laufstreifens 5,0 bis 10,0 mm beträgt.

**13.** Reifen nach einem der Ansprüche 1 bis 12,
wobei der Positivprofilanteil des Laufstreifens 60 bis 95% beträgt.

**14.** Reifen nach einem der Ansprüche 1 bis 13,
wobei die Glasübergangstemperatur der Kautschukzusammensetzung -45°C bis 0°C beträgt.

**15.** Reifen nach einem der Ansprüche 1 bis 14,
wobei ein aus dem Laufstreifen geschnittener Kautschuk die folgende Formel innerhalb von 180 Tagen nach der Vulkanisation erfüllt:

$$70 \geq Hso \geq 45$$

wobei Hso eine Härte bei Raumtemperatur bezeichnet, gemessen gemäß dem in der Beschreibung spezifizierten Verfahren.

**Revendications**

**1.** Pneumatique comprenant une bande de roulement,

la bande de roulement comprenant une composition de caoutchouc qui contient des composants de caoutchouc incluant un caoutchouc à base d'isoprène et un caoutchouc styrène-butadiène, de la silice et du noir de carbone, la composition de caoutchouc contenant la silice dans une quantité de 80 parts en masse ou plus pour 100 parts en masse des composants de caoutchouc,
la composition de caoutchouc satisfaisant aux formules (1) et (2) suivantes, la composition de caoutchouc et la bande de roulement satisfaisant aux formules (3) et (4) suivantes :

quantité de caoutchouc à base d'isoprène - teneur totale en styrène de composants de caoutchouc > 0 (1)

quantité de noir de carbone - teneur totale en styrène de composants de caoutchouc > 0 (2)

$$(3)\ A/B > 8$$

$$(4)\ |C/D| > 2{,}00$$

où A désigne la quantité (parts en masse) de la silice dans la composition de caoutchouc, B désigne une épaisseur maximum (mm) de la bande de roulement, C désigne un rapport de relief (%) de la bande de roulement, et D désigne une température de transition vitreuse (°C) de la composition de caoutchouc.

**2.** Pneumatique selon la revendication 1,

dans lequel une découpe de caoutchouc à partir de la bande de roulement satisfait à la formule (5) suivante dans les 180 jours suivant la vulcanisation :

$$(5)\ Hso/Hsa \times 100 \geq 93{,}0$$

où Hso désigne une dureté à température ambiante, et Hsa désigne une dureté à température ambiante après un traitement thermique de 168 heures à 80 °C, Hso et Hsa étant mesurées selon le procédé spécifié dans la description.

**3.** Pneumatique selon la revendication 1 ou 2,

dans lequel une découpe de caoutchouc à partir de la bande de roulement satisfait à la formule (6) suivante :

énergie de rupture (MPa·%) du caoutchouc = allongement à la rupture (%) du caoutchouc × résistance à la traction à la rupture (MPa) de caoutchouc × 1/2 ≥ 5 000, (6)

l'énergie de rupture étant mesurée selon le procédé spécifié dans la description.

**4.** Pneumatique selon l'une quelconque des revendications 1 à 3, dans lequel la composition de caoutchouc satisfait à la formule suivante :

50 > quantité de caoutchouc à base d'isoprène - teneur totale en styrène de composants de caoutchouc > 8.

**5.** Pneumatique selon l'une quelconque des revendications 1 à 4, dans lequel la composition de caoutchouc satisfait à la formule suivante :

50 > quantité de noir de carbone - teneur totale en styrène de composants de caoutchouc > 5.

**6.** Pneumatique selon l'une quelconque des revendications 1 à 5, dans lequel la composition de caoutchouc contient le caoutchouc à base d'isoprène dans une quantité de 10 à 70 % en masse sur la base de 100 % en masse des composants de caoutchouc.

**7.** Pneumatique selon l'une quelconque des revendications 1 à 6, dans lequel la composition de caoutchouc contient le noir de carbone dans une quantité de 10 à 100 parts en masse pour 100 parts en masse des composants de caoutchouc.

**8.** Pneumatique selon l'une quelconque des revendications 1 à 7, dans lequel la teneur totale en styrène des composants de caoutchouc est de 5,0 à 60,0 % en masse.

**9.** Pneumatique selon l'une quelconque des revendications 1 à 8, dans lequel la quantité A (parts en masse) de la silice dans la composition de caoutchouc et l'épaisseur maximum B (mm) de la bande de roulement satisfont à la formule suivante :

$$30 > A/B > 10.$$

**10.** Pneumatique selon l'une quelconque des revendications 1 à 9, dans lequel le rapport de relief C (%) de la bande de roulement et la température de transition vitreuse D (°C) de la composition de caoutchouc satisfont à la formule suivante :

$$5{,}50 > |C/D| > 2{,}50.$$

**11.** Pneumatique selon l'une quelconque des revendications 1 à 10, dans lequel la composition de caoutchouc contient la silice dans une quantité de 90 à 200 parts en masse pour 100 parts en masse des composants de caoutchouc.

**12.** Pneumatique selon l'une quelconque des revendications 1 à 11, dans lequel l'épaisseur maximum de la bande de roulement est de 5,0 à 10,0 mm.

**13.** Pneumatique selon l'une quelconque des revendications 1 à 12, dans lequel le rapport de relief de la bande de roulement est de 60 à 95 %.

**14.** Pneumatique selon l'une quelconque des revendications 1 à 13, dans lequel la température de transition vitreuse de la composition de caoutchouc est de -45 °C à 0 °C.

**15.** Pneumatique selon l'une quelconque des revendications 1 à 14,

dans lequel une découpe de caoutchouc à partir de la bande de roulement satisfait à la formule suivante dans les 180 jours suivant la vulcanisation :

$$70 \geq Hso \geq 45$$

où Hso désigne une dureté à température ambiante, mesurée selon le procédé spécifié dans la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020007425 A
- EP 20849974 A
- JP H1275605 A
- JP H5271326 A
- JP H5271325 A
- JP H5222115 A
- JP H11292924 A
- JP 2000037632 A
- JP S59133203 A
- JP S635401 A
- JP S62218403 A
- JP H790017 A
- JP S4319960 B
- JP S4740473 B